# EUROPEAN PATENT APPLICATION

(11) **EP 4 021 050 A1**
(43) Date of publication of application: **29.06.2022**
(21) Application number: 20868295.5
(22) Date of filing: 10.08.2020
(51) Int. Cl.: H04W 12/12, H04L 29/06

(54) **ABNORMAL TERMINAL IDENTIFYING METHOD AND APPARATUS, BASE STATION AND STORAGE MEDIUM**

(30) Priority: 25.09.2019 CN 201910909066
(71) Applicant: ZTE Corporation, Shenzhen, Guangdong 518057 (CN)
(72) Inventor: REN, Mingxia, Shenzhen, Guangdong 518057 (CN); CHEN, Fei, Shenzhen, Guangdong 518057 (CN)
(74) Representative: Raynor, Simon Mark
(86) International application number: PCT/CN2020/108160
(87) International publication number: WO 2021/057289

(57) **Abstract**

Disclosed are an abnormal terminal identifying method and apparatus, a base station, and a storage medium. The method includes: collecting communication data with terminals within a set time period; and identifying an abnormal terminal by means of self-learning according to the communication data with the terminals.

## Description

### CROSS REFERENCE TO RELATED APPLICATIONS

The present application claims priority to Chinese patent application No. 201910909066.5 filed on September 25, 2019 and entitled "ABNORMAL TERMINAL IDENTIFYING METHOD AND APPARATUS, BASE STATION, AND STORAGE MEDIUM," which is incorporated herein by reference in its entirety.

### TECHNICAL FIELD

The present disclosure relates to the field of communication technologies, and in particular, to an abnormal terminal identifying method and apparatus, a base station, and a storage medium.

### BACKGROUND

In a narrowband internet of things (NB-IoT) communication system, after completing uplink synchronization, a terminal in an idle state sends a radio link connection request (RRCConnectionRequest-NB) message to a base station through an uplink logical channel. The message carries information, such as initial identification of the terminal, a connection establishment cause, capability of supporting multi-tone by the terminal, and capability of supporting multi-carrier by the terminal. The radio link connection request message corresponds to Msg3 of a lower layer random access procedure.

Under normal conditions, after receiving the radio link connection request message, the base station performs corresponding resource allocation, and then replies a radio link connection setup (RRCConnectionSetup-NB) message to the terminal through a downlink logical channel. The radio link connection setup message corresponds to Msg4 of the lower layer random access procedure, and carries complete configuration information of SRB1, including configuration parameters for various entities such as PHY/MAC/RLC. After receiving the radio link connection setup message, the terminal configures SRB1bis and SRB1 according to the radio link connection setup message, and then replies a radio link connection setup complete (RRCConnectionSetupComplete-NB) message to the base station on SRB1bis through the uplink logical channel, so that the radio link connection setup is completed.

When the network is congested and there are no more idle resources, the radio link connection setup request message or a radio link connection recovery request message may be rejected by the base station, and in this case, the base station may reply a radio link connection reject (RRCConnectionReject-NB) message to the terminal through the downlink logical channel. Upon reception of the radio link connection reject message by the terminal, the terminal will perform the following according to 3GPP TS 36.331.

1. stop timer T300; 2. stop timer T302 if the timer T302 is running; 3. reset media access control (MAC); 4. In addition to NB-IoT, start the timer T302 with a timer value set to waitTime; 5. if the terminal is a NB-IoT terminal, or if there is an extended wait time (extendedWaitTime) and a UE supports delay tolerant access, forward the extended wait time to an upper layer; 6. if a deprioritisation request (deprioritisationReq) is included and the terminal supports radio link connection reject with deprioritization, start or restart timer T325 with a timer value set to a deprioritisationTimer signal, and store the deprioritisation request until timer T325 expires, and continue to send a radio link connection request message to the base station by the terminal after the timer expires.

However, in a NB-IoT communication network, there may be situations where a terminal or some terminals keep requesting to access the network but always fail to connect to the network due to their own problems or network problems. That is, the terminal can always send the radio link connection request, but the radio link connection setup fails all the time. However, according to the protocol, the terminal can always request to access the network. Therefore, once the above situation occurs, air interface resources of a NB-IoT base station is wasted, CPU load on a base station side is increased, and network congestion is worsen, such that the number of subscribers accepted by the network may be reduced.

In addition, if a malware on the terminal frequently connects to the network or initiates services, signaling and traffic impacts may be caused to the base station, which is also a factor to be considered for the air interface involving the NB-IoT base station.

### SUMMARY

Embodiments of the present disclosure provide an abnormal terminal identifying method and apparatus, a base station, and a storage medium, which can alleviate network congestion, save air interface resources of a NB-IoT base station, and improve network quality.

Some embodiments of the present disclosure provide an abnormal terminal identifying method, including: collecting communication data with terminals within a set time period; and identifying an abnormal terminal by means of self-learning according to the communication data with the terminals.

Some embodiments of the present disclosure further provide an abnormal terminal identifying apparatus, including: a collection module configured to collect communication data with terminals within a set time period; and an identification module configured to identify an abnormal terminal by means of self-learning according to the communication data with the terminals.

Some embodiments of the present disclosure further provide a base station, including a memory, a processor, and a computer program stored in the memory and executable on the processor. The computer program, when executed by the processor, causes the processor to perform the abnormal terminal identifying method described above.

Some embodiments of the present disclosure further provide a computer-readable storage medium storing a computer-executable instruction, where the computer-executable instruction is configured for performing the abnormal terminal identifying method described above.

### BRIEF DESCRIPTION OF THE DRAWINGS

FIG. 1 is a schematic diagram of radio link connection setup in the related art.
FIG. 2 is a schematic diagram of radio link connection setup reject in the related art.
FIG. 3 is a flowchart of an abnormal terminal identifying method according to an embodiment of the present disclosure.
FIG. 4 is a flowchart of identifying an abnormal terminal by means of self-learning according to communication data with terminals according to an embodiment of the present disclosure.
FIG. 5 is a flowchart of forming a service template by performing clustering on sample vectors according to an embodiment of the present disclosure.
FIG. 6 is a flowchart of forming a service template by dividing application data in a respective type according to characteristics of the application data in the respective type according to an embodiment of the present disclosure.
FIG. 7 is a schematic diagram of a relation between characteristics and reference values according to an embodiment of the present disclosure.
FIG. 8 is a flowchart of identifying an abnormal terminal according to a service template according to an embodiment of the present disclosure.
FIG. 9 is a flowchart of restricting a behavior of an abnormal terminal according to an embodiment of the present disclosure.
FIG. 10 is a flowchart of determining whether to restrict an access behavior of a common abnormal terminal according to current network status according to an embodiment of the present disclosure.
FIG. 11 is a structural diagram of an abnormal terminal identifying apparatus according to an embodiment of the present disclosure.

### DETAILED DESCRIPTION

Embodiments of the present disclosure will be described in detail below with reference to the accompanying drawings.

The steps shown in the flowcharts of the accompanying drawings may be performed in a computer system, including such as a set of computer-executable instructions. Although a logical order is shown in the flowcharts, in some cases, the steps shown or described may be performed in a different order from that described herein.

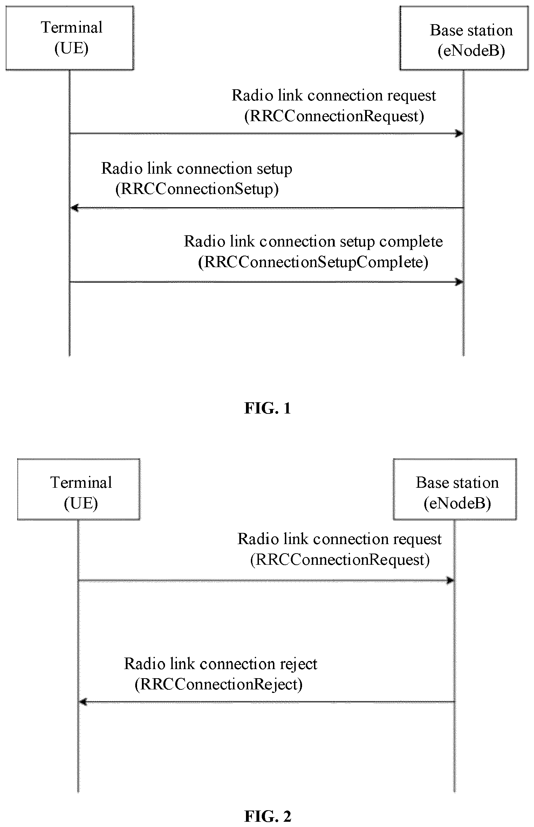

As shown in FIG. 1, under normal conditions, after receiving a radio link connection request message, a base station (eNodeB) performs corresponding resource allocation, and then replies to a terminal (UE) with a radio link connection setup (RRCConnectionSetup-NB) message through a downlink logical channel. The radio link connection setup message corresponds to Msg4 of a lower-layer random access procedure, and carries complete configuration information of SRB1, including configuration parameters for various entities such as PHY/MAC/RLC. After receiving the radio link connection setup message, the terminal configures SRBlbis and SRB1 according to the radio link connection setup message, and then replies a radio link connection setup complete (RRCConnectionSetupComplete-NB) message to the base station on SRBlbis through an uplink logical channel, so that the radio link connection setup is completed.

As shown in FIG. 2, when the network is congested and there are no more idle resources, a radio link connection setup request message or a radio link connection recovery request message may be rejected by the base station, and in this case, the base station may reply a radio link connection reject (RRCConnectionReject-NB) message to the terminal through the downlink logical channel.

However, in a NB-IoT communication network, there may be situations where one or some terminals keep requesting to access the network but always fail to connect to the network due to their own problems or network problems. That is, the terminal can always send the radio link connection request, but the radio link connection setup fails all the time. However, according to the protocol, the terminal can always request to access the network. Therefore, once this situation occurs, air interface resources of a NB-IoT base station is wasted, CPU load on a base station side is increased, and network congestion is worsen, such that the number of subscribers accepted by the network may be reduced.

In addition, if a malware on the terminal frequently connects to the network or initiates services, signaling and traffic impacts may be caused to the base station, which is also a factor to be considered for the air interface involving the NB-IoT base station.

In view of the above situation, some embodiments of the present disclosure provide an abnormal terminal identifying method. By providing a self-learning function for the base station, an abnormal terminal may be identified, stored, and processed accordingly. Therefore, by restricting behaviors of the terminals, a good network environment may be created for users.

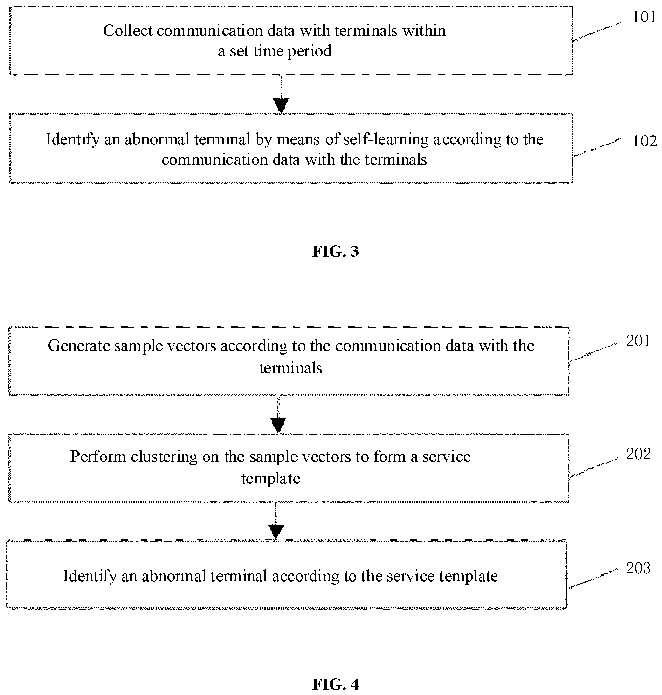

As shown in FIG. 3, the abnormal terminal identifying method according to an embodiment of the present disclosure includes following operations.

In operation 101, communication data with terminals within a set time period is collected.

The terminals may generally be narrowband internet of things (NB-IoT) terminals. The communication data with the terminals includes NB-IoT application data in communication with the terminals. The NB-IoT application data may be various service data, such as street lamp control service data, electricity meter reading report service data, water meter reading report service data, remote control service data of air conditioners in university dormitory, or parking information report service data. The set time period may be one week, one month, or half a year.

In operation 102, an abnormal terminal is identified by means of self-learning according to the communication data with the terminals.

By providing the self-learning function, the abnormal terminal is identified, stored, and processed accordingly, such that a good network environment may be created for users by restricting behaviors of the terminals.

According to embodiments of the present disclosure, the communication data with the terminals within the set time period is collected and the abnormal terminal is identified by means of self-learning according to the communication data with the terminals, such that network congestion may be alleviated, and air interface resources of the NB-IoT base station may be saved, thereby improving network quality.

As shown in FIG. 4, in an embodiment, identifying the abnormal terminal by means of the self-learning according to the communication data with the terminals includes following operations.

In operation 201, sample vectors are generated according to the communication data with the terminals.

In an embodiment, the sample vectors are generated by performing a vectorization processing on the communication data with the terminals.

An example of the vectorization processing is as follows. For example, select three service characteristics, including a time interval between two network access requests, uplink data volume, and downlink data volume. The three service characteristics are taken as three components of a characteristic vector respectively. Thereafter, data values respectively corresponding to these three service characteristics are extracted in real time from the communication data with the terminals. For example, for each of the three service characteristics, five data are respectively extracted from the communication data with the terminals, and thus the five data associated with each service characteristic constitutes one row component of the characteristic vector. Therefore, after the vectorization processing, a matrix with 3 rows and 5 columns is obtained.

In operation 202, clustering is performed on the sample vectors to form a service template.

In operation 203, the abnormal terminal is identified according to the service template.

In an embodiment, an algorithm for the clustering may be an unsupervised learning clustering algorithm in machine learning.

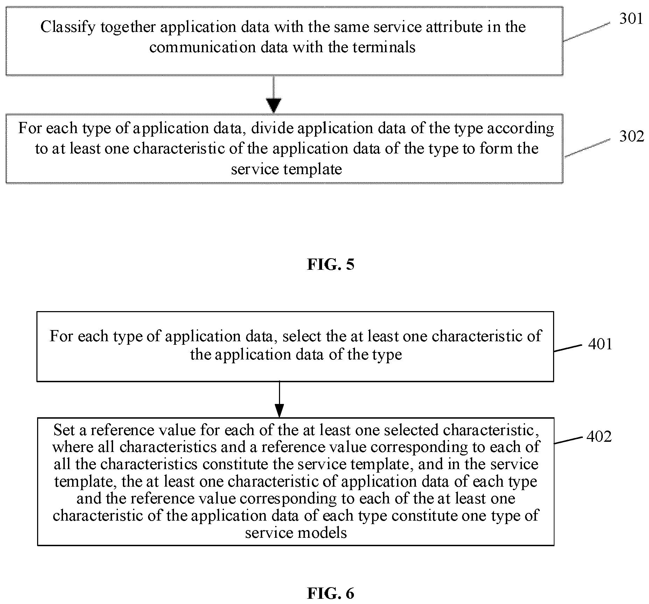

As shown in FIG. 5, in an embodiment, clustering is performed on the sample vectors to form the service template as follows.

In operation 301, application data having a same service attribute in the communication data with the terminals are classified together.

For example, the application data having the same service attribute in the communication data with the terminals includes: the street lamp control service data, the electricity meter reading report service data, the water meter reading report service data, the remote control service data of air conditioners in university dormitory, or the parking information report service data. According to service attributes, the street lamp control service data is classified as a first type of service data; the electricity meter reading report service data is classified as a second type of service data; the water meter reading report service data is classified as a third type of service data, the remote control service data of air conditioners in university dormitory is classified as a fourth type of service data, and the parking information report service data is classified as a fifth type of service data.

In operation 302, for each type of application data, application data of the type is divided according to at least one characteristic of the application data of the type to form the service template.

As shown in FIG. 6, in an embodiment, dividing, for each type of application data, the application data of the type according to the at least one characteristic of the application data of the type to form the service template includes following operations.

In operation 401,for each type of application data, at least one characteristic of the application data of the type is selected.

The at least one characteristic of the application data is selected. The at least one characteristic may be a service characteristic or some service characteristics of the application data used by the terminal. For example, the characteristics may be a time interval between a time at which the terminal requests to access the network and a time at which the terminal requested to access the network last time, or uplink data volume or downlink data volume of each communication service of the terminal, etc.

In operation 402, a corresponding reference value is set for each of the at least one characteristic selected, all characteristics and a reference value corresponding to each of all the characteristics constitute the service template, and in the service template, the at least one characteristic of the application data of each type and the reference values corresponding to each of the at least one characteristic of the application data of each type constitute one type of service models.

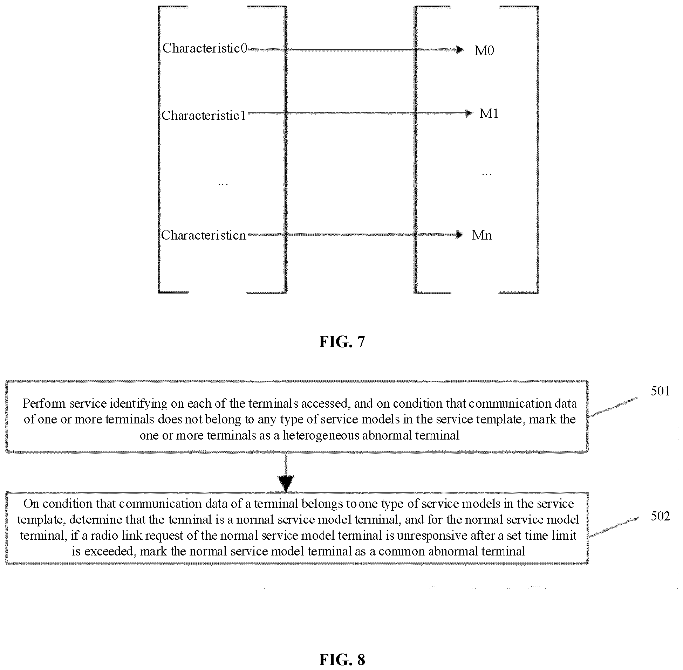

Each service characteristic corresponds to one reference value. For example, the time interval for the terminal to request to access the network is 1 day. In this case, the service characteristic is the time interval for the terminal to request to access the network, and the reference value corresponding to the characteristic is 1 day. In a process of machine learning, one or more service characteristics may be selected for clustering as needed and then corresponding reference values may be set. As shown in FIG. 7, [characteristic 0, characteristic 1, ..., characteristic n] are the selected service characteristics, and [M0, M1, ..., Mn] correspond to the reference values of the characteristics.

In an embodiment, the reference value is determined according to an initial value and an oscillation factor.

If the initial value and the oscillation factor are set, the reference value may be determined according to actual experience or characteristics of the service model. For example, for a certain service model, when the initial value is set to 1 and the oscillation factor is set to 0.8, the reference value of the characteristic ranges from initial value ^{∗} oscillation factor to 1/oscillation factor ^{∗} initial value. That is, under this characteristic standard, terminals each having a corresponding reference value ranging from 0.8^{∗}1 to 1/0.8^{∗} 1 are classified as one class. Alternatively, the initial value and the oscillation factor are not set, and setting of the reference value may be relied on a relevant clustering algorithm.

In an embodiment, communication data with the terminals in different set time periods is collected and thus the abnormal terminal identifying method may be performed multiple times.

In this way, through continuous machine learning, with the update of collected communication data, the system can automatically adjust the reference value or oscillation factor corresponding to the characteristic.

In case that there are multiple characteristics, output conclusions obtained after learning is performed on different characteristics may vary. For example, an output conclusion obtained after learning is performed on one characteristic is that terminals are classified as one class, and an output conclusion obtained after learning is performed on another characteristic is that the terminal are not classified as one class. In this case, continue to track and learn the communication data of the terminal, and further analyze the characteristics of the communication data of the terminal. After a period of machine learning, the system outputs clustering results, so as to form the service template. Under a same service template, behaviors of the terminal are similar and recognizable.

In addition, on condition that a large amount of communication data with the terminals within the set time period collected as samples is accumulated, it may be considered that characteristics to be classified are comprehensive, and therefore supervised learning classification may be adopted. The service template obtained after the clustering may be updated within a certain range. A supervised classification algorithm is used to predict a category of new data that does not appeared in a database, and the template is updated, such that the template may be suitable for new samples, that is, have a generalization ability.

The "supervised classification" refers to that the previously service templates obtained after clustering are used as training samples. When new data arrives, an optimal model is trained with the existing training samples, and a specific label is assigned to the new data. For example, a simple K-nearest neighbor (KNN) classification algorithm is adopted, communication data of a terminal within a set time period is used as a new sample, a distance between the new sample and each of all training samples is calculated, and K known training samples closest to the new sample are selected. According to a majority rule, the new sample is classified to a class (category) in which the number of samples from the *K* nearest neighbor samples is maximum. K is a positive integer greater than 1, and a value of K may be set according to actual situations.

As shown in FIG. 8, identifying the abnormal terminal according to the service template includes the following.

In operation 501, service identifying is performed on each of the terminals accessed, and if communication data of a terminal or some terminals does not belong to any type of service models in the service template, the terminal is marked as a heterogeneous abnormal terminal or the terminals are marked as heterogeneous abnormal terminals.

The communication data not belonging to a service model in the service template means that a characteristic(s) of the communication data and a reference value(s) corresponding to the characteristics do not match the characteristic(s) and corresponding reference value(s) in the service model, respectively.

In operation 502, on condition that communication data of a terminal belongs to a type of service models in the service template, determine that the terminal is a normal service model terminal, and for the normal service model terminal, if a radio link request of the normal service model terminal is still unresponsive after a set time limit is exceeded, the normal service model terminal is marked as a common abnormal terminal.

Herein, the set time limit is generally set to more than 90 seconds.

In an embodiment, a terminal identified as the heterogeneous abnormal terminal or the common abnormal terminal is saved in real time.

In an embodiment, identifying the abnormal terminal according to the service template further includes the following. For terminals in a tracking area update (TAU) cycle or between two network attachments, each of the terminals should correspond to a temporary mobile subscriber identity (TMSI). Setting of the TMSI is to prevent illegal individuals or groups from stealing an international mobile subscriber identity (IMSI) or tracking a user's location by eavesdropping on signaling on a wireless path. The TMSI is a temporary user identification number assigned to subscribers by visiting location registers (VLRs) to ensure safety of the IMSI in mobile communications, which is used to temporarily replace the IMSI for transmission over the air interface. The TMSI is only valid for a certain time period in one location area, so during this period, a same TMSI should correspond to a same service model. Therefore, when one TMSI corresponds to different service models, it means that a terminal, having a TMSI corresponding to different service models, is abnormal, and thus the terminal should be marked as a heterogeneous abnormal terminal.

Herein, for terminals in the TAU update cycle or between two network attachments, each terminal should correspond to one TMSI. Therefore, during this period, a same TMSI should correspond to a same service model. when a TMSI corresponds to different service models, it means that the terminal, having the TMSI corresponding to different service models, is abnormal, and thus, the terminal should be marked as the heterogeneous abnormal terminal. When there is a TMSI malicious access, a success rate of RRC connection setup may drop significantly, which may cause serious damage to network indicators. In this case, statistics on the success rate of the RRC connection setup is inaccurate. Through learning, the system may effectively identify the TMSI malicious access, and thus can mark the maliciously attacked terminal as the heterogeneous abnormal terminal. As such, a probability of TMSI malicious access is reduced, such that the statistics on the success rate of RRC connection setup may be relatively normal and more accurate.

In an embodiment, before forming the service template, a random access tracking diagnosis is performed on a terminal with an abnormal access. If the terminal fails to successfully access within a given time period, the terminal is directly marked as the common abnormal terminal.

The terminal with an abnormal access generally refers to a mobile terminal that fails to access the base station after the set time is exceeded. The set time may be set to more than 90 seconds, and a given time period may be set to more than 100 seconds.

In an embodiment, after identifying the abnormal terminal, the method further includes: restricting a behavior of the abnormal terminal.

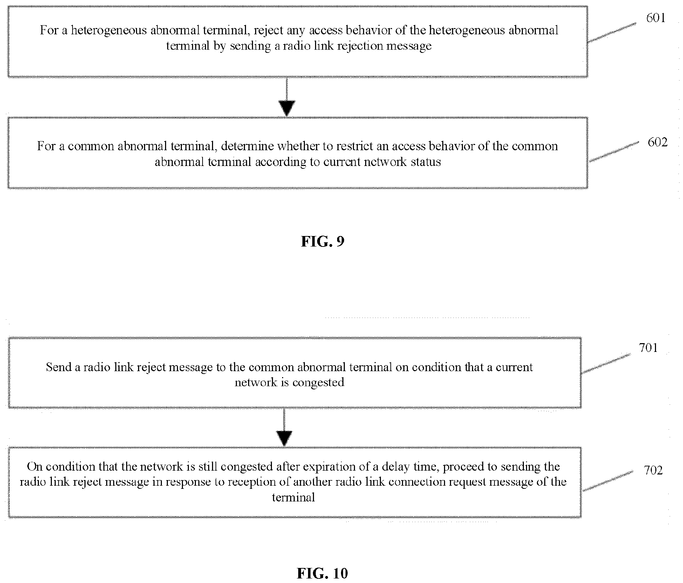

As shown in FIG. 9, in an embodiment, restricting the behavior of the abnormal terminal includes following operations.

In operation 601, for a heterogeneous abnormal terminal, any access behavior of the heterogeneous abnormal terminal is rejected by sending a radio link reject message.

"Access" refers to a behavior of accessing the base station by the heterogeneous abnormal terminal. The radio link reject message sent in this case may carry an infinite delay time (delayTime), so that the terminal cannot initiate any access behavior thereafter. The radio link reject message may also carry a specific reject cause, to notify the terminal not to initiate any access behavior thereafter.

In operation 602, for a common abnormal terminal, determine whether to restrict an access behavior of the common abnormal terminal according to current network status.

The common abnormal terminal accesses the base station through the network.

As shown in FIG. 10, determining whether to restrict the access behavior of the common abnormal terminal according to the current network status includes following operations.

In operation 701, on condition that a current network is congested, a radio link reject message is sent to the common abnormal terminal.

If a large number of terminals need to access the base station, a network load is high, and in this case, a conclusion that the network is congested is obtained according to a network congestion judgment condition. Therefore, it is necessary to send the radio link reject message to the common abnormal terminal. The specific network congestion judgment condition is determined according to actual conditions.

In an embodiment, the sent radio link reject message carries a set delay time.

The sent radio link rejection message carries a set delay time (delayTime), so that the terminal can only initiate an access request again after expiration of the delay time, so as to alleviate network congestion. In a case that the radio link reject message received by the terminal carries the delay time (delayTime), the terminal can know that the network is congested and is temporarily set to be restricted to access due to multiple access failures of the terminal. The terminal needs to wait for the delay time (delayTime) before sending the radio link connection request message again to initiate a radio link connection request.

In operation 702, if the network is still congested after expiration of the delay time, in response to reception of another radio link connection request message from the terminal, proceed to send the radio link reject message.

In an embodiment, after identifying the abnormal terminal, the method further includes: sharing information of the identified abnormal terminal.

Generally, information sharing is carried out as follows. Information of the identified abnormal terminal stored in the local base station is sent to neighboring base stations in real time or at regular intervals through an information exchange module such as a 3G module or a 4G module, so as to exchange and share information between base stations, such that the neighboring base stations can also restrict the behaviors of the abnormal terminal. In addition, information of another abnormal terminal stored in the neighboring base station is also sent to the local base station for processing. The information exchange between the adjacent base stations may improve efficiency of identifying and storing the abnormal terminal, and avoid waste of resources caused by repeated identification and storage of the same abnormal terminal by different base stations.

To sum up, the abnormal terminal identifying method is low in cost, does not require additional hardware equipment, and is easy to implement and convenient to operate and maintain. In addition, in terms of function, according to embodiments of the present disclosure, network congestion may be effectively alleviated, CPU load of the base station may be reduced, and the statistics on the success rate of the radio link setup may be more accurate. Furthermore, when the network suffers attack from an external abnormal terminal, the base station can also effectively identify and stop the attack from the external abnormal terminal.

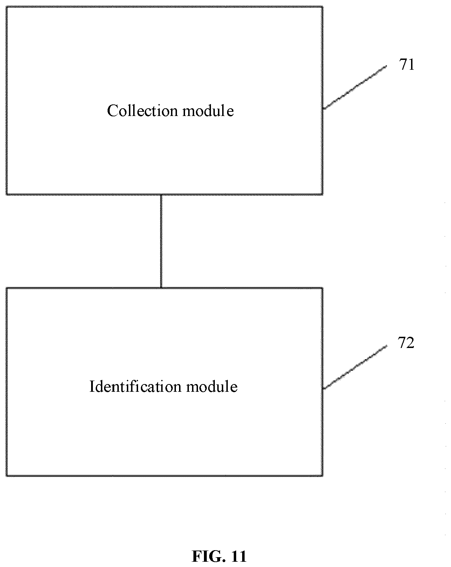

As shown in FIG. 11, embodiments of the present disclosure further provide an abnormal terminal identifying apparatus, including following modules.

A collection module 71 is configured to collect communication data with terminals within a set time period. An identification module 72 is configured to identify the abnormal terminal by means of self-learning according to the communication data with the terminals.

In an embodiment, the identification module is further configured to generate sample vectors according to the communication data with the terminals, perform clustering on the sample vectors to form a service template, and identify the abnormal terminal according to the service template.

In an embodiment, the identification module is further configured to classify together application data having a same service attribute in the communication data with the terminals, and divide, for each type of application data, application data of the type according to at least one characteristic of the application data of the type to form the service template.

In an embodiment, the identification module is further configured to select, for each type of application data, the at least one characteristic of the application data of the type and set a reference value for each of the at least one characteristic selected, where all characteristics and a reference value corresponding to each of all the characteristics constitute the service template, and in the service template, the at least one characteristics of the application data of each type and the reference value corresponding to each of the at least one characteristic of the application data of each type constitute one type of service models.

In an embodiment, the identification module is further configured to perform service identifying on each of the terminals accessed. On condition that communication data of one or more terminals does not belong to any type of service models in the service template, the one or more terminals are marked as a heterogeneous abnormal terminal(s). On condition that communication data of a terminal belongs to one type of service models in the service template, determine that the terminal is a normal service model terminal, and for the normal service model terminal, if a radio link request of the normal service model terminal is unresponsive after a set time limit is exceeded, the normal service model terminal is marked as a common abnormal terminal.

In an embodiment, the abnormal terminal identifying apparatus further includes a saving module. The saving module is configured to save a terminal identified as a heterogeneous abnormal terminal or a common abnormal terminal is saved in real time.

In an embodiment, the abnormal terminal identifying apparatus further includes a restriction module. The restriction module is configured to restrict a behavior of the abnormal terminal.

In an embodiment, the restriction module is further configured to reject, for a heterogeneous abnormal terminal, any access behavior of the heterogeneous abnormal terminal by sending a radio link reject message; and determine, for a common abnormal terminal, whether to restrict an access behavior of the common abnormal terminal according to current network status.

In an embodiment, the restriction module is further configured to send a radio link reject message to the common abnormal terminal on condition that a current network is congested; and proceed to, in response to reception of another radio link connection request message from the terminal, sending the radio link reject message, on condition that the network is still congested after expiration of a delay time.

In an embodiment, the abnormal terminal identifying apparatus further includes a sharing module. The sharing module is configured to share information of the identified abnormal terminal.

To sum up, the abnormal terminal identifying apparatus is low in cost, does not require additional hardware equipment, and is easy to implement and convenient to operate and maintain. In addition, in terms of function, according to embodiments of the present disclosure, network congestion may be effectively alleviated, CPU load of the base station may be reduced, and the statistics on the success rate of the radio link setup may be more accurate. Furthermore, when the network suffers attack from an external abnormal terminal, the base station can also effectively identify and stop the attack from the external abnormal terminal.

Some embodiments of the present disclosure further provide a base station, including a memory, a processor, and a computer program stored in the memory and executable on the processor. The computer program, when executed by the processor, causes the processor to perform the abnormal terminal identifying method when executing the computer program.

According to the embodiment of the present disclosure, a self-learning function may be provided for the base station, the abnormal terminal is identified, stored, and processed accordingly, such that a good network environment may be created for users by restricting behaviors of the terminals. Therefore, it is possible to overcome the problems and deficiencies in the related art that air interface resources of the base station are wasted and network congestion is aggravated which are caused by that the abnormal terminal keeps requesting to access the network.

Some embodiments of the present disclosure further provide a computer-readable storage medium storing a computer-executable instruction, where the computer-executable instruction is configured for performing the abnormal terminal identifying method described above.

In this embodiment, the above-mentioned storage medium may include, but is not limited to, a USB flash drive, a read-only memory (ROM), a random access memory (RAM), a mobile hard disk, a magnetic disk, or an optical disk, etc. that may store program codes.

In addition, some embodiments of the present disclosure also provide a computer program product. The computer program product includes a computer program stored on a non-transitory computer-readable storage medium. The computer program includes program instructions that, when executed by a computer, cause the computer to execute the method in any of the above method embodiments.

Those skilled in the art should understand that all or some of the operations, system, functional modules/units of the device in the methods disclosed above may be implemented as software, firmware, hardware, and appropriate combinations thereof. In a hardware implementation, the division between functional modules/units mentioned in the above description does not necessarily correspond to the division of physical components. For example, a physical component may have multiple functions, or a function or step may be performed by several physical components cooperatively. Some or all of the physical components may be implemented as software executed by a processor, such as a digital signal processor or a microprocessor, or as hardware, or as an integrated circuit, such as an application specific integrated circuit. Such software may be distributed on a computer-readable medium, and the computer-readable medium may include a computer storage medium (or non-transitory medium) and a communication medium (or transitory medium). As known to those of ordinary skill in the art, the term computer storage medium includes volatile or non-volatile, removable or non-removable medium used in any method or technology for storing information (such as computer-readable instructions, data structures, computer program modules, or other data). The computer-readable storage medium include but are not limited to a random access memory (RAM), a read-only memory (ROM), an electrically erasable programmable read only memory (EEPROM), a flash memory or other storage technologies, a compact disc read-only memory (CD-ROM), a digital versatile disk (DVD) or other optical disk storage, a magnetic cassette, a magnetic tape, a magnetic disk storage or other magnetic storage devices, or any other medium used to store desired information and that may be accessed by a computer. In addition, as known to those of ordinary skill in the art, the communication medium typically includes computer readable instructions, data structures, program modules, or modulated data signals such as carrier waves or other transport mechanisms.

## Claims

1. An abnormal terminal identifying method, comprising:
collecting communication data with terminals within a set time period; and
identifying an abnormal terminal by means of self-learning according to the communication data with the terminals.

2. The method according to claim 1, wherein identifying the abnormal terminal by means of the self-learning according to the communication data with the terminals comprises:
generating sample vectors according to the communication data with the terminals;
performing clustering on the sample vectors to form a service template; and
identifying the abnormal terminal according to the service template.

3. The method according to claim 2, wherein the performing clustering on the sample vectors to form the service template comprises:
classifying together application data having a same service attribute in the communication data with the terminals; and
for each type of application data, dividing application data of the type according to at least one characteristic of the application data of the type to form the service template.

4. The method according to claim 3, wherein dividing, for each type of application data, the application data of the type according to the at least one characteristic of the application data of the type to form the service template comprises:
for each type of application data:
selecting the at least one characteristic of the application data of the type; and
setting a reference value for each of the at least one characteristic selected, wherein
all characteristics and a reference value corresponding to each of all the characteristics constitute the service template, and in the service template, the at least one characteristic of application data of each type and the reference value corresponding to each of the at least one characteristic of the application data of each type constitute one type of service models.

5. The method according to claim 4, wherein the reference value is determined according to an initial value and an oscillation factor.

6. The method according to claim 2, comprising:
collecting communication data with the terminals in different set time periods to perform the abnormal terminal identifying method multiple times.

7. The method according to claim 2, wherein identifying the abnormal terminal according to the service template comprises:
performing service identifying on each of the terminals accessed; and
in response to communication data of one or more terminals not belonging to any type of service models in the service template, marking the one or more terminals as a heterogeneous abnormal terminal; or
in response to communication data of a terminal belonging to a type of service models in the service template, determining that the terminal is a normal service model terminal, and for the normal service model terminal, in response to a radio link request of the normal service model terminal being unresponsive after a set time limit is exceeded, marking the normal service model terminal as a common abnormal terminal.

8. The method according to claim 2, wherein a terminal identified as a heterogeneous abnormal terminal or a common abnormal terminal is saved in real time.

9. The method according to claim 2, wherein identifying the abnormal terminal according to the service template further comprises:
for terminals in a tracking area update, TAU, cycle or between two network attachments, each of the terminals should correspond to a temporary mobile subscriber identity, TMSI, and on condition that one TMSI corresponds to different service models, determining that a terminal, having a TMSI corresponding to different service models, is abnormal, and marking the terminal as a heterogeneous abnormal terminal.

10. The method according to claim 2, further comprising:
before forming the service template:
performing a random access tracking diagnosis on a terminal with an abnormal access; and
in response to the terminal not successfully accessing within a given time period, marking the terminal as a common abnormal terminal directly.

11. The method according to claim 2, further comprising:
after identifying the abnormal terminal:
restricting a behavior of the abnormal terminal.

12. The method according to claim 11, wherein restricting the behavior of the abnormal terminal comprises:
for a heterogeneous abnormal terminal, rejecting any access behavior of the heterogeneous abnormal terminal by sending a radio link reject message; and
for a common abnormal terminal, determining whether to restrict an access behavior of the common abnormal terminal according to current network status.

13. The method according to claim 12, wherein determining whether to restrict the access behavior of the common abnormal terminal according to the current network status comprises:
sending a radio link reject message to the common abnormal terminal in response to a current network being congested;
on condition that the network is still congested after expiration of a delay time, in response to reception of another radio link connection request message from the terminal, proceeding to sending the radio link reject message.

14. The method according to claim 2, further comprising:
after identifying the abnormal terminal:
sharing information of the identified abnormal terminal.

15. A base station, comprising a memory, a processor, and a computer program stored in the memory and executable on the processor, wherein the computer program, when executed by the processor, causes the processor to perform the abnormal terminal identifying method of any of claims 1 to 14.

16. A computer-readable storage medium storing a computer-executable instruction, wherein the computer-executable instruction is configured for performing the abnormal terminal identifying method according to any one of claims 1 to 14.
